# EUROPÄISCHE PATENTSCHRIFT

(11) **EP 2 279 459 B1**
(45) Veröffentlichungstag und Bekanntmachung des Hinweises auf die Patenterteilung: **03.04.2013**
(21) Anmeldenummer: 09735466.6
(22) Anmeldetag: 20.04.2009
(51) Int. Cl.: G03H 1/22, G02F 1/1335, G03H 1/02, G03H 1/00

(54) **SICHERHEITSELEMENT MIT EINEM ELEKTRISCH STIMULIERBAREN POLARISATIONSABHÄNGIGEN VOLUMENHOLOGRAMM UND VERFAHREN ZU DESSEN HERSTELLUNG**
SECURITY ELEMENT WITH AN ELECTRICALLY STIMULATABLE POLARISATION-DEPENDENT VOLUME HOLOGRAM AND METHOD FOR THE PRODUCTION THEREOF
ÉLÉMENT DE SÉCURITÉ COMPORTANT UN HOLOGRAMME DE VOLUME ÉLECTROSTIMULABLE DÉPENDANT DE LA POLARISATION ET SON PROCÉDÉ DE PRODUCTION

(30) Priorität: 21.04.2008 DE 102008020770
(43) Veröffentlichungstag der Anmeldung: 02.02.2011
(73) Patentinhaber: Bundesdruckerei GmbH, 10969 Berlin (DE)
(72) Erfinder: LEOPOLD, André, 10119 Berlin (DE); FISCHER, Jörg, 13053 Berlin (DE); PAESCHKE, Manfred, 16348 Wandlitz OT Basdorf (DE)
(74) Vertreter: Obst, Bernhard
(86) Internationale Anmeldenummer: PCT/EP2009/002992
(87) Internationale Veröffentlichungsnummer: WO 2009/130037

(56) Entgegenhaltungen:
- WO-A-98/38546
- DE-A1-102004 062 418
- JP-A- 5 027 226

## Beschreibung

Die Erfindung betrifft Sicherheitselemente, die ein elektrisch stimulierbares Hologramm umfassen sowie ein Verfahren zu dessen Herstellung. Die Sicherheitselemente dienen dazu, ein Sicherheits- und/oder Wertdokument gegen Fälschung und/oder Kopieren zu sichern. Eine Art von Sicherheitselementen umfasst Volumenhologramme. In einem Volumenhologramm sind Informationen gespeichert, die oftmals auch individualisierende Angaben, beispielsweise Seriennummern, Ausweisnummern, biometrische Daten, geografische Daten, Bilder (Passbilder), usw., enthalten. Diese Informationen können in Klarschrift bzw. Bildform oder optisch codiert bzw. maschinenlesbar in dem Hologramm gespeichert sein.

Ein mögliches Verfahren zur Herstellung von Hologrammen mit individualisierenden Angaben ist beispielsweise in der Literaturstelle EP 0 896 260 A2 beschrieben. Die Grundzüge werden im Folgenden kurz erläutert. Zunächst wird ein Hologrammmaster, der als Hologramm ausgebildet ist, hergestellt. Dann wird der Hologrammmaster hinter ein holografisches Aufzeichnungsmaterial positioniert, beispielsweise in flächigen Kontakt, gegebenenfalls getrennt durch eine Schutzfolie Kohärentes Licht, beispielsweise aus einem Laser, wird auf die dem Hologrammmaster abgewandte Seite des holografischen Aufzeichnungsmaterials eingestrahlt, typischerweise mit definierter Wellenlänge und definiertem Inzidenzwinkel, gegebenenfalls nach Maßgabe des vom Hologrammmaster zu rekonstruierenden holografischen Musters. Es durchdringt das holografische Aufzeichnungsmaterial und wird vom Hologrammmaster gebeugt bzw. reflektiert, wobei sich das Hologramm durch Interferenz mit dem einfallenden Licht in dem holografischen Aufzeichnungsmaterial abbildet und durch photochemische oder photophysikalische Prozesse im holografischen Aufzeichnungsmaterial speichert. Dabei kann der Hologrammmaster so ausgelegt sein, dass er für mehrere Wellenlängen empfindlich ist und diese entsprechend beugt bzw. reflektiert. Auch andere geometrische Anordnungen als die hier Beschriebene sind möglich.

Ferner kann ein solches Kontaktkopierverfahren auch mit Hologrammmastern ausgeführt werden, die kein Hologramm sind. Solche Hologrammmaster können beispielsweise eine sägezahnartige oder schuppenartige Struktur aufweisen, wie sie aus der DE 2007 06796 U1 bekannt sind.

Eine Individualisierung des Hologramms kann über eine Modulation des verwendeten Lichts erfolgen. Aus der Praxis sind Spatial Light Modulatoren in Form von Liquid Crystal Displays (LCD) bekannt. Die Funktionsweise ähnelt hierbei einer Projektion eines Dias, wobei der Spatial Light Modulator anstelle des Dias tritt. Aus der Praxis sind des weiteren digitale Projektoren bekannt, die beispielsweise einen Digital Micro Mirror Device (DMD) oder einen Liquid Crystal on Silicon (LCoS) als Spatial Light Modulator umfassen.

Alternativ kann eine Individualisierung über individuell bedruckte Folien vorgenommen werden, die ähnlich zu einem Diapositiv in dem Strahlengang des kohärenten Lichts, ggf. auch innig mit dem holografischen Material verbunden, angeordnet werden.

Eine Belichtung des Hologramms kann mit Licht einer Wellenlänge (einfarbig) oder mit unterschiedlichen Wellenlängen (farbig) erfolgen. Hierbei können in den unterschiedlichen Wellenlängen unterschiedliche Individualisierungsmuster in das Hologramm gespeichert werden.

Um eine Fälschungssicherheit und/oder Manipulationssicherheit von Sicherheitselementen mit einem Volumenhologramm weiter zu steigern, sind Sicherheitselemente bekannt, die eine veränderte optische Rekonstruktion bei Einwirkung einer externen Anregung aufweisen. In der WO 2007/042176 A1 ist beispielsweise ein interaktives Sicherheitselement beschrieben, dass mindestens ein Volumenhologramm umfasst. Das Volumenhologramm reagiert auf mindestens eine äußere Anregung und zeigt einen definierten optischen Effekt in Form einer Abbildung, wobei der optische Effekt in Form der Abbildung vorzugsweise für unterschiedliche Betrachtungswinkel unterschiedlich ist und die unterschiedlichen Abbildungen zumindest dann beobachtbar sind, wenn die externe Anregung angewendet worden ist. Ferner sind ein Verfahren zur Verifikation des interaktiven Sicherheitselements sowie eine Anwendung als öffentliches Merkmal für Sicherheitsprodukte, beispielsweise Banknoten, Reisepässe, Identifikationsdokumente, Eintrittskarten, usw., beschrieben.

Aus der WO 00/62104 A1 sind ein System und ein Verfahren zur Modulation einer Lichtintensität bekannt. Beschrieben ist ein Lichtintensitätsmodulator, der ein Hologramm verwendet. Bei einer Ausführungsform umfasst der Lichtintensitätsmodulator einen elektrischen Schaltkreis und ein holografisches optisches Element, welches ein Hologramm umfasst. Das holografische optische Element ist elektrisch mit einer variablen Spannung verknüpft und empfängt diese, die von dem elektrischen Schaltkreis erzeugt ist. Zusätzlich empfängt das holografische optische Element einfallendes Licht einer Lichtquelle. Das holografische optische Element empfängt und beugt das einfallende Licht, um erstes und zweites Ausgabelicht zu erzeugen. Eine Intensität des ersten Ausgabelichts variiert direkt mit einer Größe der Spannung. Das erste und zweite Ausgabelicht schließen einen von Null verschiedenen Winkel zwischen einander ein. Bei dem beschriebenen System wird beim Anlegen einer Wechselspannung ein Brechungsindex in einem polymerdispergierten Flüssigkristall verändert.

Aus der US 6,821,457 B1 ist ein photopolymerisierbares Material bekannt, welches eine Einschrittaufzeichnung eines Volumenhologramms gestattet, dessen Eigenschaften elektrisch gesteuert werden können. Ein polymerdispergiertes Flüssigkristall umfasst eine homogene Mischung aus einem nematischen Flüssigkristall und einem multifunktionalen Pentaacrylmonomer in Kombination mit einem Photoinitiator, Co-Initiator und einem Vernetzungsmittel. Das vorgeschlagene Material kann ein Interferenzmuster als Hologramm speichern. Hierbei werden deutlich getrennte Flüssigkristalldomänen und ausgehärtete Polymerdomänen geschaffen. Volumentransmissionsgitter, die mit dem neuen Material hergestellt sind, können elektrisch zwischen einer nahezu hundertprozentigen Beugungseffizienz und einer nahezu nullprozentigen Beugungseffizienz geschaltet werden.

Ein Element gemäβ Oberbegriff des Anspruchs 1 ist aus WO 98/38546 bekannt.

Die bekannten Sicherheitselemente und/oder -materialien gestatten es zwar, elektrisch stimulierbare Hologramme herzustellen, jedoch lassen sich insbesondere komplizierte holografische Strukturen, die gegebenenfalls eine Mehrfachbelichtung eines holografischen Aufzeichnungsmaterials erfordern, nicht realisieren.

### Technisches Problem der Erfindung

Der Erfindung liegt das technische Problem zugrunde, ein verbessertes Sicherheitselement oder ein verbessertes Verfahren zur Herstellung eines Sicherheitselements zu schaffen, welches über eine angelegte Spannung stimulierbar ist, um einen optisch wahrnehmbaren Effekt auszulösen, wobei nicht speziell an eine elektrische Stimulation angepasste Volumenhologramme verwendet werden können.

### Definitionen

Ein Sicherheitselement ist eine bauliche Einheit, die zumindest ein Sicherheitsmerkmal umfasst. Ein Sicherheitselement kann eine selbstständige bauliche Einheit sein, die mit einem Sicherheits- und/oder Wertdokument verbunden, beispielsweise verklebt; werden kann, es kann sich aber auch um einen integralen Bestandteil eines Sicherheits- und/oder Wertdokumentes handeln. Ein Beispiel für Erstes ist ein auf ein Sicherheits- und/oder Wertdokument aufklebbares Visum. Ein Beispiel für Letzteres ist ein in einen Geldschein oder einen Ausweis integriertes, beispielsweise einlaminiertes Hologramm.

Ein Sicherheitsmerkmal ist eine Struktur, die nur mit (gegenüber einfachem Kopieren) erhöhtem Aufwand oder gar nicht unautorisiert herstellbar bzw. reproduzierbar ist.

Ein Muster besteht typischerweise aus einer Vielzahl nebeneinander angeordneter Mustereinheiten bzw. Pixel. Die Mustereinheiten bzw. Pixel eines Musters sind einander zugeordnet und in definierter Weise lateral zueinander angeordnet, typischerweise in zwei Raumdimensionen. Die Mustereinheiten sind in der Regel gleich beschaffen. Sie können jedoch auch unterschiedlich, beispielsweise unterschiedlich groß oder unregelmäßig angeordnet, sein.

Als Sicherheits- und/oder Wertdokumente seien lediglich beispielhaft genannt: Personalausweise, Reisepässe, ID-Karten, Zugangskontrollausweise, Visa, Steuerzeichen, Tickets, Führerscheine, Kraftfahrzeugpapiere, Banknoten, Schecks, Postwertzeichen, Kreditkarten, Bankkarten, beliebige Chipkarten und Haftetiketten (z. B. zur Produktsicherung). Solche Sicherheits- und/oder Wertdokumente weisen typischerweise mindestens ein Substrat, mindestens eine Druckschicht und optional eine transparente Deckschicht auf. Ein Substrat ist eine Trägerstruktur, auf welche die Druckschicht mit Informationen, Bildern, Mustern und dergleichen aufgebracht wird. Als Materialien für ein Substrat kommen alle fachüblichen Werkstoffe auf Papier- und/oder Kunststoffbasis in Frage.

Ein Spatial Light Modulator (SLM) erlaubt eine zweidimensional ortsaufgelöste Beleuchtung bzw. Bestrahlung eines meist flächigen Gegenstandes mit modulierter Intensität und/oder Phase. Hierbei kann es sich beispielsweise um einen DMD (Digital Micro Mirror Device) Chip, ein LCD (Liquid Crystal Display) Transmissionsdisplay oder ein LCoS (Liquid Crystal on Silicon) Display handeln. Allen ist gemeinsam, dass eine Vielzahl von SLM-Pixeln gebildet ist, wobei jedes SLM-Pixel unabhängig von anderen SLM-Pixeln aktivierbar oder deaktivierbar ist (auch Zwischenstufen sind möglich), wodurch durch entsprechende Ansteuerung der SLM-Pixel sich Muster oder Bilder projizieren lassen. Durch die freie Ansteuerbarkeit können auch ohne weiteres verschiedene Bilder oder Muster in zeitlicher Folge hintereinander generiert werden, beispielsweise in Form eines Passfotos.

Ein Code bzw. Muster ist individualisierend, wenn er einzigartig für eine Person oder einen Gegenstand oder eine Gruppe von Personen oder Gegenständen aus einer größeren Gesamtmenge an Personen oder Gegenständen ist. Ein für eine Gruppe von Personen innerhalb der Gesamtmenge der Einwohner eines Landes individualisierender Code ist beispielsweise die Stadt des Wohnortes. Ein für eine Person individualisierender Code ist beispielsweise das Passbild. Eine Seriennummer eines Ausweises ist hingegen für diesen ein individualisierendes Merkmal. Ein für eine Gruppe von Geldscheinen innerhalb der Gesamtmenge der Geldscheine individualisierender Code ist die Wertigkeit. Für einen Geldschein individualisierend ist die Seriennummer. Beispiele für nicht individualisierende Codes bzw. Muster sind Wappen, Siegel, Hoheitszeichen, etc. für Sicherheit oder Wertdokumente eines Hoheitsgebiets. Als personalisierende Informationen werden solche angesehen, die einer Person zuordenbare Informationen umfassen. Diese können beispielsweise Bildinformationen, beispielsweise ein Passbild, ein Fingerabdruck usw., oder alphanumerische Zeichenfolgen, wie einen Namen, eine Adresse, einen Wohnort, ein Geburtsdatum usw., umfassen.

Ein holografisches Aufzeichnungsmaterial ist eine Schicht aus einem Material, welches photosensitiv ist, und in welcher sich Holografien durch irreversible, aber auch reversible photochemische und/oder photophysikalische Prozesse im Wege der Belichtung speichern lassen. Alle bekannten Materialien können eingesetzt werden, so dass auf die Fachliteratur des Durchschnittsfachmannes verwiesen werden kann. Lediglich beispielhaft seien die in der Holografie üblichen Photopolymere genannt.

Der Begriff der Farbe wird im Rahmen der Erfindung als eine Wellenlänge oder ein eng begrenztes Wellenlängenintervall bzw. eine Spektrallinie verstanden. Mischfarben weisen mehrere verschiedene Wellenlängen bzw. Spektrallinien auf. Der Begriff der Farbe umfasst daher neben dem sichtbaren Bereich auch UV und IR.

Flüssigkristalle sind Substanzen, die in einer Phase vorliegen, welche zum einen fluide Eigenschaften wie eine Flüssigkeit aufweist, andererseits jedoch optische Eigenschaften, beispielsweise eine Doppelbrechung, aufweist, wie diese für Kristalle typisch sind.

Nematische Flüssigkristalle sind jene, die in einer so genannten nematischen Phase vorliegen, bei der sich die einzelnen Moleküle (Flüssigkristalle) entlang ihrer Molekülachse ausrichten. Eine Unterform der nematischen Phase ist die cholesterische, die eine nematische Ordnung mit sich kontinuierlich drehender Vorzugsorientierung aufweist. Dies bedeutet, dass sich eine langreichweitige helikale Überstruktur ergibt.

Als eine Flüssigkristallzelle wird eine funktionelle Einheit aufgefasst, die zwischen Ausrichtungsschichten angeordnete Flüssigkristalle sowie zugeordnete Elektroden umfasst, zwischen denen eine Spannung angelegt werden kann, so dass sich über das sich ergebende elektrische Feld eine Beeinflussung der kollektiven optischen Eigenschaften der Flüssigkristalle ergibt. Insbesondere kann eine Ausrichtung der Flüssigkristalle beeinflusst werden, welche einen Einfluss auf die polarisierenden Eigenschaften der Flüssigkristallzelle hat. Die Flüssigkristallzelle muss nicht als monolithische Baueinheit ausgeführt sein. Die einzelnen Bestandteile müssen nicht alle unmittelbar aneinander angrenzen. Zwischen einer oder beiden Elektroden und den Ausrichtungsschichten sowie den Flüssigkristallen können andere Elemente, die nicht zur Flüssigkristallzelle gehören, angeordnet sein.

Eine Ausrichtungsschicht ist eine Entität, die eine Ausrichtung von an diese Ausrichtungsschicht angrenzenden Flüssigkristallen beeinflusst. Die Ausrichtungsschicht kann eine speziell behandelte Oberfläche einer anderen baulichen Einheit, beispielsweise eines Substrats oder einer Elektrode sein.

### Grundzüge der Erfindung und bevorzugte Ausführungsform

Die Erfindung schafft ein Sicherheitselement, umfassend mindestens eine Flüssigkeitskristallzelle, welche zwischen zwei einander gegenüberliegend angeordneten Ausrichtungsschichten angeordnete Flüssigkristalle umfasst, wobei die den Flüssigkristallen zugewandten Oberflächen der Ausrichtungsschichten so beschaffen sind, dass sich die Flüssigkristalle, d. h. die Moleküle eines Flüssigkristallmediums, in einem feldfreien Grundzustand helixartig ausrichten, wobei der mindestens einen Flüssigkeitskristallzelle zwei Elektroden zugeordnet sind, zwischen denen ein elektrisches Feld anlegbar ist, bei dessen Existenz ein Umschaltzustand eintritt, bei dem sich die Flüssigkristalle umorientieren, und auf einer Lichteinfallseite der Flüssigkristalle der mindestens einen Flüssigkristallzelle ein Polarisationsfilter angeordnet ist, wobei vorgesehen ist, auf einer der Lichteinfallseite gegenüberliegenden Lichtausfallseite der Flüssigkristalle der mindestens einen Flüssigkeitskristallzelle mindestens ein Hologramm anzuordnen, dessen Rekonstruktion von einem Polarisationszustand des zur Rekonstruktion verwendeten Lichts abhängig ist. Dies bedeutet, dass beispielsweise insbesondere eine Beugungseffizienz des Hologramms von einem Polarisationszustand des Lichts abhängig ist. Da die Flüssigkristallzelle eine Polarisationsrichtung des durchtretenden Lichts beeinflusst, kann über eine Änderung der optischen Eigenschaft der Flüssigkristallzelle eine Änderung der beobachtbaren und/oder nachweisbaren Rekonstruktion erreicht werden. Eine Flüssigkeitskristallzelle ist so ausgebildet, dass sie durch die Zelle hindurch tretendes polarisiertes Licht im feldfreien Grundzustand verändert. In dem Umschaltzustand richten sich die Flüssigkristalle (in der Regel Moleküle) parallel zu dem elektrischen Feld aus. In diesem Zustand kann das Licht durch die Flüssigkeitskristallzelle hindurchtreten, ohne dass dessen Polarisationszustand verändert wird. Ist das an einer Lichtausfallseite der Flüssigkristalle der Flüssigkeitskristallzelle angeordnete mindestens eine Hologramm so ausgebildet, dass dessen Beugungseffizienz von dem Polarisationswinkel des einfallenden Rekonstruktionslichts abhängig ist, so kann über eine Beeinflussung der Polarisation des auftreffenden Lichts durch ein elektrisch induziertes Umschalten zwischen dem Grundzustand und dem Umschaltzustand eine Rekonstruktion des Hologramms elektrisch schaltend beeinflusst werden.

Hierbei wird eine Flüssigkeitskristallzelle vorteilhafterweise so ausgestaltet, dass linear polarisiertes Licht, welches auf der Lichteinfallseite in die Flüssigkristalle der Flüssigkeitskristallzelle einfällt, im Polarisationszustand so verändert wird, dass eine Polarisationsrichtung gemessen quer zur Ausbreitungsrichtung um einen Winkel von 90° oder 270° gedreht wird. Dies bedeutet, dass der elektrische Feldvektor des Lichts in der Flüssigkeitskristallzelle um 90° oder 270° gedreht wird. Es ergibt sich für den Fachmann, dass eine zusätzliche Drehung des elektrischen Feldvektors um ein Vielfaches von 180° jeweils im Wesentlichen dasselbe bewirkt. Da polarisationsabhängige Hologramme eine cos²θ-Abhängigkeit vom Polarisationswinkel, gemessen in einer Ebene senkrecht zur Ausbreitungsrichtung des Lichts relativ zur Beugungsebene, aufweisen, wird durch eine Änderung der Polarisationsrichtung um 90°, 270° bei einer geeigneten Ausrichtung des Hologramms relativ zu der ursprünglichen Polarisationsrichtung des Lichts ein maximaler Unterschied bei der Beugungseffizienz optimalerweise zwischen null Prozent und einem Maximum, vorzugsweise von mehr als 90 Prozent, oder umgekehrt bewirkt. Wird durch den Polarisationsfilter vor der Lichteinfallseite der Flüssigkristalle der Flüssigkeitskristallzelle beispielsweise linear polarisiertes Licht erzeugt, so wird dessen elektrischer Vektor, d. h. die Polarisationsrichtung, um beispielsweise 270° beim Durchtreten durch die Flüssigkristallzelle im Grundzustand gedreht. Das mindestens eine Hologramm ist nun vorzugsweise so ausgerichtet, dass es von diesem Licht optimal rekonstruiert wird, d. h. eine maximale Beugungseffizienz aufweist. Befindet sich die Flüssigkristallzelle hingegen im Umschaltzustand, so wird eine Polarisationsrichtung des linearpolarisierten Lichts nicht verändert. Dies bedeutet, das aus der Flüssigkristallzelle austretende Licht ist senkrecht polarisiert zu dem Licht, welches im Grundzustand aus der Flüssigkristallzelle austritt. Aufgrund der polarisationsabhängigen Rekonstruktion, welche einer cos²θ-Abhängigkeit folgt, ist die Beugungseffizienz für dieses Licht minimal. Man erhält somit ein Sicherheitsmerkmal, bei dem die Rekonstruktion des Hologramms abhängig von dem Zustand der Flüssigkristallzelle des Sicherheitselementes ist. Durch ein Anlegen einer geeigneten Spannung lässt sich somit ein einfach wahrzunehmender optischer Effekt auslösen, der zur Verifikation hinsichtlich einer Echtheit und/oder einer Unversehrtheit des Sicherheitsmerkmals verwendet werden kann.

Grundsätzlich können auch andere als so genannte verdrillte nematische Flüssigkristallzellen (twisted nematic, TN), beispielsweise STN-Flüssigkristallzellen (Super-Twisted-Nematic, STN), DSTN-Flüssigkristallzellen (Double-Super-Twist-Nematic, DSTN), PDLC-Flüssigkristallzellen (Polymer-Dispersed-Liquid-Cristall, PDLC) usw. eingesetzt werden. Aufgrund der Polarisationsabhängigkeit des Volumenhologramms kann gegenüber den sonst üblichen Anordnungen jedoch auf einer Lichtausfallseite ein Polarisationsfilter eingespart werden.

Ein Verfahren zum Erzeugen eines Sicherheitselements sieht vor, dass mindestens eine Flüssigkristallzelle, welche zwischen zwei einander gegenüberliegend angeordneten Ausrichtungsschichten angeordnete Flüssigkristalle umfasst, wobei die den Flüssigkristallen zugewandten Oberflächen der Ausrichtungsschichten so beschaffen sind, dass sich die Flüssigkristalle in einem feldfreien Grundzustand helixartig ausrichten, und sich die Flüssigkristalle in einem ein elektrisches Feld aufweisenden Umschaltzustand umorientieren, zwischen zwei der mindestens einen Flüssigkristallzelle zugeordneten Elektroden angeordnet wird, zwischen denen das elektrische Feld zum Erzeugen des Umschaltzustands anlegbar ist, und vor einer Lichteinfallseite der Flüssigkristalle der Flüssigkristallzelle ein Polarisationsfilter angeordnet wird, wobei vorgesehen ist, dass auf einer Lichteinfallseite gegenüberliegenden Lichtausfallseite der Flüssigkristalle der mindestens einen Flüssigkristallzelle mindestens ein Hologramm angeordnet wird, dessen Rekonstruktion von einem Polarisationszustand des Lichts abhängig ist. Ein so hergestelltes Sicherheitsmerkmal kann beispielsweise in ein Sicherheits- und/oder Wertdokument integriert werden, um dieses gegenüber Fälschungen zu sichern. Dieses kann beispielsweise durch ein Einlaminieren und/oder ein Aufkleben oder auf beliebig andere Art und Weise erfolgen. Formulierungen wie "vor der Lichteinfallseite" oder "auf einer Lichteinfallseite gegenüberliegenden Lichtausfallseite der Flüssigkristalle der mindestens einen Flüssigkristallzelle" sollen jeweils einen Bereich vor bzw. hinter der Lichteinfallseite bzw. Lichtausfallseite der Flüssigkristalle bezeichnen. Hierbei muss eine vor, hinter und/oder auf einer Lichteinfall oder einer Lichtausfallseite angeordnete Einheit nicht unmittelbar an die Flüssigkristalle angrenzen. Vielmehr können ein oder mehrere Elemente, beispielsweise eine Elektrode, zwischen den Flüssigkristallen und der entsprechenden Einheit angeordnet sein.

Die beschriebene Ausführungsform der Erfindung weist ein unterschiedliches Rekonstruktionsverhalten des Hologramms im Grundzustand und im Umschaltzustand der Flüssigkristallzelle auf, auch ohne dass zwischen der Lichtausfallseite der Flüssigkristalle der Flüssigkristallzelle und dem mindestens einen Hologramm ein Polarisationsfilter angeordnet ist, wie dies sonst bei handelsüblichen Flüssigkristallanzeigen üblich ist. Bei diesen ist vor der Lichteinfallseite der Flüssigkristalle der Flüssigkristallzelle und "hinter" der Lichtausfallseite der Flüssigkristalle der Flüssigkristallzelle jeweils ein Polarisationsfilter angeordnet. Diese sind zueinander in ausgewählter Weise orientiert. Bei einer Ausführungsform, bei der die Polarisationsfilter zueinander parallel ausgerichtet sind, wird Licht durch die Anordnung nur im Umschaltzustand transmittiert. Im Grundzustand hingegen tritt aus dem zweiten Polarisationsfilter kein Licht aus. Hierbei ist angenommen, dass die Polarisation des Lichts beim Durchtreten durch die Flüssigkristallzelle im Grundzustand um 90° gedreht wird. Sind die Polarisationsfilter hingegen zueinander gekreuzt, d. h. orthogonal orientiert, tritt durch die Anordnung aus Polarisationsfiltern und Flüssigkristallzelle im Grundzustand Licht aus und im Umschaltzustand hingegen keines. Die Anordnung nach dem Stand der Technik ist dann im Grundzustand intransparent. Bei der beschriebenen Vorrichtung gemäß der Erfindung tritt hingegen in dem Falle, dass das Licht nicht für eine Rekonstruktion optimal oder korrekt polarisiert ist, Licht durch das mindestens eine Hologramm aus. Dies bedeutet aber zusätzlich auch, das Licht, welches nicht unter einem optimalen Rekonstruktionswinkel für das mindestens eine Hologramm auf dieses auftrifft, durch dieses hindurch tritt, so dass gegebenenfalls hinter dem mindestens einen Hologramm angeordnete Informationen, beispielsweise auf eine darunter liegende Schicht aufgedruckte Zeichen, Muster, Texte, usw., für einen Betrachter sichtbar sind.

Gemäß einer bevorzugten Ausführungsform ist somit das mindestens eine Hologramm relativ zu dem Polarisationsfilter so ausgerichtet und je mindestens eine Flüssigkristallzelle so ausgestaltet, dass das mindestens eine Hologramm in dem feldfreien Grundzustand der Flüssigkristallzelle eine maximale Beugungseffizienz und in dem Umschaltzustand der Flüssigkristallzelle eine minimale Beugungseffizienz aufweist. Eine andere Ausgestaltung sieht genau das Gegenteil vor, dass das mindestens eine Hologramm in dem feldfreien Grundzustand der Flüssigkristallzelle eine minimale Beugungseffizienz und in dem Umschaltzustand der Flüssigkristallzelle eine maximale Beugungseffizienz aufweist. Die Ausgestaltung der Flüssigkristallzelle legt beispielsweise fest, um welchen Betrag die Polarisationsrichtung des hindurchtretenden Lichts gedreht wird.

In dem mindestens einen Hologramm kann eine Reflexionshologrammstruktur oder eine Transmissionshologrammstruktur gespeichert sein. Es ist ebenfalls möglich, dass sowohl eine Reflexionshologrammstruktur als auch eine Transmissionshologrammstruktur in dem mindestens einen Hologramm gespeichert sind, die für gleiche und/oder unterschiedliche Polarisationsrichtungen eine maximale bzw. minimale Beugungseffizienz aufweisen. Darüber hinaus ist es möglich, holografische Strukturen, sowohl Reflexions- als auch Transmissionsstrukturen, in dem mindestens einen Hologramm zu speichern, die für unterschiedliche Wellenlängen rekonstruieren, d. h. unterschiedliche Wellenlängen beugen. Hierdurch wird es möglich, das mindestens eine Hologramm unterschiedlich auszugestalten und eine Vielzahl von unterschiedlichen Sicherheitsmerkmalen in das mindestens eine Hologramm einzuspeichern.

Insbesondere kann das mindestens eine Hologramm eine Individualisierungsinformation eines oder mehrerer Individualisierungsmuster umfassen. Um auch eine über das Anlegen einer oder mehrerer elektrischer Spannungen eine Individualisierungsinformation zusätzlich sichtbar zu machen, ist bei einer Ausführungsform der Erfindung vorgesehen, dass zusätzlich eine oder mehrere Flüssigkristallzellen neben der mindestens einen Flüssigkristallzelle angeordnet sind bzw. werden, denen jeweils Elektroden zugeordnet sind bzw. werden, um bei Anlegen eines elektrischen Feldes eine Umorientierung der Flüssigkristalle zu erreichen, und vor deren Einfallsseite der Polarisationsfilter oder weitere Polarisationsfilter angeordnet sind. Bei einer Ausführung ist somit zwischen einem Polarisationsfilter und mindestens einem Hologramm eine Vielzahl individuell ausgebildeter Flüssigkeitskristallzellen ausgebildet, denen jeweils zwei Elektroden zugeordnet sind, um die Zellen zwischen dem Grundzustand und dem Umschaltzustand durch ein Anlegen einer Spannung umzuschalten. Hierbei können in den einzelnen Flüssigkristallzellen individuell jeweils zwei eigene Elektroden zugeordnet sein. Ebenso sind Ausführungsformen möglich, bei denen die Flüssigkeitskristallzellen jeweils eine gemeinsame Elektrode besitzen und zusätzlich eine individuell zugeordnete Elektrode zum Umschalten der einzelnen Flüssigkeitskristallzellen aufweisen. Ferner ist es möglich, diese individuellen Elektroden gruppenweise zu verbinden, so dass über ein Anlegen einer Spannung an einen Kontakt eine Vielzahl der weiteren Flüssigkeitskristallzellen gemeinsam geschaltet werden kann. Über eine Anordnung der einzelnen Flüssigkeitskristallzellen kann somit ebenfalls ein Individualisierungsmuster realisiert werden. Am einfachsten ist dies möglich, wenn die mindestens eine Flüssigkristallzelle und die weiteren Flüssigkristallzellen in einem matrixartigen Raster oder einer beliebig anderen Anordnung erzeugt werden und anschließend deren Elektroden selektiv zu einer oder mehreren Gruppen zusammengefasst werden. Dieses kann auf einfache Weise erfolgen, indem zunächst alle den Flüssigkristallzellen individuell zugeordneten Elektroden elektrisch leitend miteinander verbunden sind. Anschließend ist es möglich, zur Individualisierung die elektrisch leitenden Verbindungen zwischen einzelnen der Flüssigkristallzellen und/oder an einem gemeinsamen elektrischen Kontaktpunkt, über den die Spannung angelegt werden kann, gezielt zu unterbrechen.

Es ist somit möglich, eine Anzeigematrix zu bilden, mit der sich beliebige, individuelle Muster, Bilder oder Textinformation usw., darstellen lassen. Diese Anzeigematrix ist vorteilhafter aus Zeilen und Spalten aufgebaut, diese Form bildet eine Passivmatrix. Durch ein zeilenweises Ansteuern ist die Darstellung von Bildinformationen möglich. Alternativ kann die Anzeige auch als Aktivmatrix aufgebaut sein, bei der sich jedem Bildpunkt (Pixel, Mustereinheit) ein aktives Schaltelement zugeordnet ist, z. B. eine Diode oder ein Transistor.

Die Elektroden sind vorzugsweise transparent ausgestaltet. Insbesondere bietet sich eine Ausgestaltung der Elektroden mittels transparenter Metalloxide, wie Indiumzinnoxid (SnO₂) ITO, Indiumzinkoxid, ZnO, Antimonzinnoxid (ATO), oder organischer Materialien, wie PEDOT/PSS, Pani®, Orgacon® an. Eine Individualisierung kann bei der Herstellung oder nachträglich beispielsweise durch gezielte Laserbestrahlung und eine hierdurch hervorgerufene Ablation einzelner Elektroden oder von Verbindungen erreicht werden. Alternative Methoden umfassen Ätzen und photolithografische Strukturierung, aber auch Drucken, Sputtern, Spincoaten.

Um insbesondere auch transmissionsholografische Strukturen auf nicht transparenten Sicherheitsdokumenten verwenden zu können, ist bei einer Ausführungsform der Erfindung vorgesehen, dass an einer von der Flüssigkristallzelle und/oder den mehreren Flüssigkristallzellen abgewandten Seite des Hologramms ein reflektierendes Element, insbesondere ein spiegelndes Element, angeordnet ist oder wird. Ein solches kann beispielsweise eine metallische Schicht sein. Eine solche Schicht kann auf einem Substratträger beispielsweise durch Drucken mittels unterschiedlicher Druckverfahren aufgebracht werden. Alternativ kann eine solche Schicht durch Sputtern, Bedampfen, oder Ähnliches aufgebracht werden. Das mindestens eine Hologramm sowie die Flüssigkeitskristallzelle oder -zellen sowie Elektroden und der Polarisationsfilter oder die Polarisationsfilter können hierüber angebracht werden.

Das erzeugte Sicherheitselement kann unterschiedliche Ausprägungen annehmen. Insbesondere kann über oder mit dem Sicherheitselement eine erste individualisierende und/oder personalisierende Information, beispielsweise ein Gesichtsbild einer Person, gespeichert werden. Bei einer Ausführungsform erfolgt dieses, indem in dem mindestens einen Hologramm eine oder mehrere individualisierende und/oder personalisierende erste Informationen gespeichert sind oder werden.

Eine andere Ausführungsform sieht vor, dass alternativ oder zusätzlich die eine und die mehreren weiteren Flüssigkristallzellen individuell ansteuerbar sind und eine Anzeigevorrichtung ausbilden. Somit kann über eine gezielte Ansteuerung erreicht werden, dass beispielsweise nur bestimmte Bereiche des mindestens einen Hologramms rekonstruiert werden oder nicht rekonstruiert werden.

Wieder eine andere Ausführungsform sieht vor, dass ein oder mehrere Schaltelemente mit der mindestens einen Flüssigkristallzelle und/oder den mehreren weiteren Flüssigkristallzellen verbunden sind, so dass diese einzeln und/oder gruppenweise über das eine oder die mehreren Schaltelemente mit einer Spannung beaufschlagbar sind. Hierüber wird beispielsweise eine weitere Möglichkeit geschaffen, eine individualisierende oder personalisierende Information in dem Sicherheitsmerkmal zu speichern und gezielt abzurufen.

Ferner sieht eine Ausführungsform alternativ oder zusätzlich vor, dass einige Flüssigkristallzellen der mindestens einen und der mehreren weiteren Flüssigkristallzellen und/oder einige der diesen einigen Flüssigkristallzellen zugeordneten weiteren Polarisationsfilter so ausgebildet sind, dass diese einigen Flüssigkristallzellen in einem spannungslosen Zustand eine von den übrigen Flüssigkristallzellen abweichende Polarisationseigenschaft aufweisen und über eine relative Anordnung dieser einigen Flüssigkristallzellen zueinander und/oder gegenüber den Ausrichtungsschichten der übrigen Flüssigkristallzellen eine zweite individualisierende und/oder personalisierende Information gespeichert ist. Diese kann beispielsweise erreicht werden, in dem die Ausrichtungsschichten relativ zu einem gemeinsamen Polarisationsfilter so ausgestaltet und ausgerichtet werden, dass diese um 90° gegenüber den übrigen Flüssigkristallzellen gedreht sind. Alternativ können bei einer Verwendung von den Flüssigkristallzellen individuell zugeordneten mehreren weiteren Polarisationsfiltern diese für die einigen Flüssigkristallzellen, die gleich aufgebaut und ausgerichtet sind wie die übrigen Flüssigkristallzellen, anders als für die übrigen Flüssigkristallzellen orientiert sein oder werden.

Ferner kann eine individualisierende und/oder personalisierende Information gespeichert werden, in dem die der mindestens einen Flüssigkristallzelle und den mehreren weiteren Flüssigkristallzellen zugeordneten Elektroden so strukturiert werden, dass eine Auswahl hiervon über ein Anlegen einer einzigen Spannung gemeinsam zwischen ihrem Grundzustand und ihrem Umschaltzustand umgeschaltet werden können. Dieses ermöglicht es, dass die Auswahl der Flüssigkristallzellen umgeschaltet wird, während die verbleibenden übrigen Flüssigkristallzellen nicht verändert werden.

Die einzelnen Merkmale des erfindungsgemäßen Verfahrens weisen die entsprechenden Vorteile die Merkmale des Sicherheitselements auf.

Nachfolgend wird die Erfindung anhand bevorzugter Ausführungsbeispiele näher erläutert. Hierbei zeigen:
- Fig. 1:: eine schematische Schnittansicht durch ein Sicherheitselement;
- Fig. 2:: eine schematische Darstellung zur Erläuterung der Polarisationsabhängigkeit der Beugungseffizienz eines Hologramms;
- Fig. 3a:: eine schematische Schnittdarstellung durch ein Sicherheitselement, bei dem keine Spannung zwischen den Elektroden anliegt und eine hohe Beugungseffizienz des Hologramms vorliegt;
- Fig. 3b:: eine schematische Darstellung des Sicherheitselements nach Fig. 3a, bei dem eine Spannung zwischen den Elektroden angelegt ist, und eine Beugungseffizienz minimal ist;
- Fig. 4:: eine schematische Darstellung einer Draufsicht auf ein Sicherheitselement, welches eine Vielzahl von Flüssigkristallzellen und zugeordneten Elektroden aufweist; und
- Fig. 5:: eine schematische Schnittansicht entlang der Linie A-A nach Fig. 4.

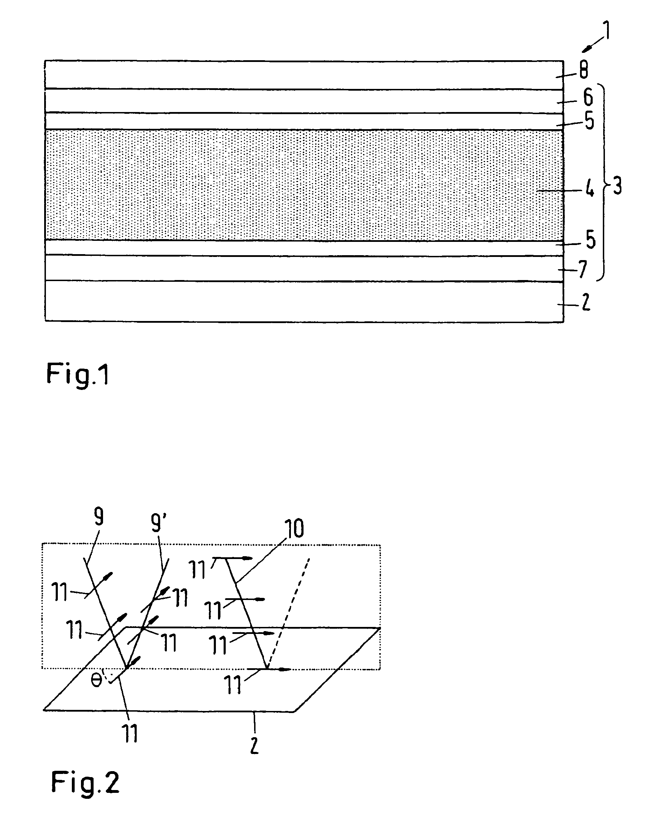

In Fig. 1 ist schematisch eine Schnittansicht durch ein Sicherheitselement 1 dargestellt. Das Sicherheitselement umfasst ein Hologramm 2. Dieses ist in der Regel ein optisch dickes Gitter, und kann auf jede dem Fachmann bekannte Art hergestellt sein. Insbesondere kann das Hologramm über eine Kontaktkopie in ein Aufzeichnungsmaterial belichtet sein. Besonders bevorzugt werden Ausführungsformen, bei denen das Hologramm 2 für eine Person und/oder einen Gegenstand individualisiert ist. Dies bedeutet, dass beispielsweise ein Individualisierungsmuster in dem Hologramm 2 gespeichert ist. Das Hologramm 2 kann ein- oder mehrfarbig ausgebildet sein. Hierbei ist das Hologramm 2 so ausgestaltet, dass es eine Polarisationsabhängigkeit hinsichtlich einer Beugungseffizienz bei einer Rekonstruktion des Hologramms 2 aufweist. Dieses wird weiter unten unter Bezugnahme auf Fig. 2 näher erläutert.

Das Sicherheitselement 1 umfasst ferner eine Flüssigkristallzelle 3, die Flüssigkristalle 4 zwischen einander gegenüberliegenden Ausrichtungsschichten 5 der Flüssigkristallzelle 3 einschließt. Die Ausrichtungsschichten 5 sind so ausgebildet, dass sich eine nematische Phase der Flüssigkristaelle 4 in einer cholesterischen Formation ausbildet. Dies bedeutet, dass sich die nematischen Flüssigkristalle 4 anliegend an die Ausrichtungsschichten 5 jeweils gleichförmig ausrichten. Ein Abstand der Ausrichtungsschichten 5 und eine Oberflächenbeschaffenheit der Ausrichtungsschichten 5 sind so gewählt, dass sich eine helixartige Verbindung der nematischen Flüssigkristalle 4zwischen den an die Ausrichtungsschichten 5 angrenzenden Flüssigkristallen ausbildet. Die Flüssigkristallzelle 3 umfasst ferner Elektroden 6 und 7, die relativ zu den Flüssigkristallen 4 so angeordnet sind, dass über ein Anlegen einer Spannung, d. h. einem Beaufschlagen mit einer Ladung, sich zwischen den Elektroden 6 und 7 ein elektrisches Feld ausbildet, welches eine Orientierung der Flüssigkristalle in der Flüssigkristallzelle 3 und hierüber eine polarisationsverändernde Eigenschaft der Flüssigkristallzelle 3 verändert. In der dargestellten Ausführungsform sind die Elektroden oberhalb und unterhalb des Flüssigkristalls 4 angeordnet. Zwischen den Elektroden 6 und 7 ist eine Spannung anlegbar.

In einem Grundzustand, in dem keine Spannung zwischen den Elektroden 6, 7 angelegt ist, d. h., die Flüssigkristallzelle 3 feldfrei ist, richten sich die nematischen Flüssigkristalle 4 in der Flüssigkristallzelle 3 so aus, dass sie die beschriebene helixartige Struktur ausbilden. Wird hingegen eine Spannung zwischen den Elektroden 6, 7 angelegt, so dass in der Flüssigkristallzelle 3 ein elektrisches Feld vorherrscht, so ändern die Flüssigkristalle 4 ihre Orientierung und richten sich an dem elektrischen Feld aus. Dieser Zustand wird Umschaltzustand genannt. Im Grundzustand wird ein Polarisationsvektor von Licht, welches durch die Flüssigkristallzelle 3 hindurchtritt, gedreht. Eine Drehung entspricht etwa einer Drehung, die die Flüssigkristalle durch ihre helixartige Struktur festlegen. Sind die an die gegenüberliegenden Ausrichtungsschichten 5 angrenzenden nematischen Kristalle gegeneinander beispielsweise um 90° oder 270° verdreht, so wird eine Polarisationsrichtung des Lichts beim Durchtritt durch die Flüssigkristallzelle 3 im Grundzustand ebenfalls um 90° bzw. 270° gedreht. Hierbei wird davon ausgegangen, dass das eintretende Licht beispielsweise linear polarisiert ist. Im Umschaltzustand, in dem sich die nematischen Flüssigkristalle an dem elektrischen Feld ausrichten, wird hingegen eine Polarisationsrichtung des durch die Flüssigkristallzelle 3 hindurchtretenden Lichts nicht verändert. Um zu erreichen, dass nur polarisiertes Licht einer vorgegebenen Polarisierungsrichtung durch die Flüssigkristallzelle 3 tritt, umfasst das Sicherheitselement ferner einen Polarisationsfilter 8. Der Polarisationsfilter 8 ist in der Lage auftreffendes Licht beispielsweise linear zu polarisieren.

Anhand von Fig. 2 soll eine Polarisationsabhängigkeit einer Beugungseffizienz eines optisch dicken Gitters, d. h. eines Volumenhologramms erläutert werden. Auf ein Hologramm 2 treffen zwei unterschiedlich polarisierte Rekonstruktionslichtstrahlen 9, 10 auf, die unterschiedlich polarisiert sind. Der eine Rekonstruktionslichtstrahl 9 ist senkrecht zur Beugungsebene polarisiert, d. h., die elektrischen Feldvektoren 11 stehen senkrecht auf der Beugungsebene, die durch den einen einfallenden Rekonstruktionslichtstrahl 9 und den gebeugten Rekonstruktionslichtstrahl 9' festgelegt ist. In diesem Falle ist die Beugung maximal. Der andere Rekonstruktionslichtstrahl 10 weist eine Polarisationsrichtung auf, bei der die elektrischen Feldvektoren 11 parallel zur Beugungsebene ausgerichtet sind. In diesem Falle ist eine Beugungseffizienz minimal. Im optimalen Falle beträgt die Beugungseffizienz bei einem senkrecht zur Beugungsebene polarisierten Rekonstruktionslichtstrahl 9 mehr als 90 % und die Beugungseffizienz bei einem einfallenden Rekonstruktionslichtstrahl 10, der in der Beugungsebene polarisiert ist, 0 %. Bezeichnet θ den Winkel des elektrischen Feldvektors relativ zur Beugungsebene, so gilt für die Beugungseffizienz eine Abhängigkeit vom cos²θ. In der Praxis ist die Winkelabhängigkeit nicht bei allen Hologrammen so stark ausgeprägt, wie hier beispielhaft beschrieben. Eine starke Abhängigkeit von der Polarisationsrichtung erhält man jedoch in der Regel, wenn der Winkel zwischen dem einfallenden Rekonstruktionsstrahl und dem ausfallenden rekonstruierten, d. h. dem gebeugten, Strahl 90° entspricht. Eine Polarisationsrichtungsabhängigkeit beobachtet man häufig jedoch auch bei anderer Rekonstruktionsgeometrie.

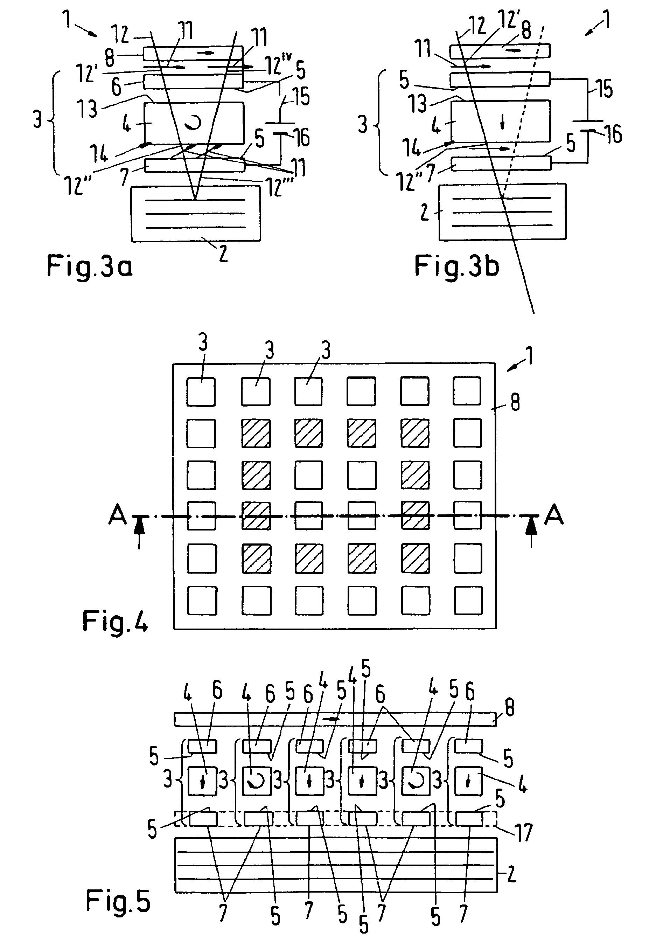

Anhand von Fig. 3a und 3b soll nun das Verhalten des Sicherheitselements schematisch erläutert werden. Gleiche technische Merkmale besitzen in allen Figuren dieselben Bezugszeichen. In Fig. 3 ist das Sicherheitselement nach Fig. 1 erneut schematisch dargestellt, wobei die einzelnen Bestandteile durch Zwischenräume getrennt dargestellt sind. Diese Zwischenräume existieren bei einem real hergestellten Sicherheitselement selbstverständlich nicht. Das Sicherheitselement 1 ist ebenso aufgebaut wie das Sicherheitselement nach Fig. 1 und umfasst einen Polarisationsfilter 8, eine Flüssigkristallzelle 3 mit Flüssigkristallen 4 und der Flüssigkristallzelle 3 zugeordneten Elektroden 6, 7 sowie ein polarisationsabhängiges Hologramm 2. Im Folgenden (auch bei den weiteren beschriebenen Ausführungsformen) wird davon ausgegangen, dass die Ausrichtungsschichten 5 jeweils auf den den Flüssigkristallen 4 zugewandten Seiten der Elektroden 6, 7 ausgebildet sind. Sie können bei anderen Ausführungsformen auf einem Substart zwischen den Flüssigkristallen und den Elektroden ausgebildet sein. Auf das Sicherheitselement 1 trifft Rekonstruktionslicht 12. Aus dem Polarisationsfilter 8 tritt polarisiertes Rekonstruktionslicht 12', dessen elektrischer Feldvektor 11 in der Zeichnungsebene liegt. Das polarisierte Rekanstruktionslicht 12' tritt dann durch die Elektrode 6, die einer Lichteinfallseite 13 der Flüssigkristalle 4 der Flüssigkristallzelle 3 zugewandt ist. Die Elektrode 6 und die Elektrode 7, die einer Lichtausfallseite 14 zugewandt ist, sind für das Rekonstruktionslicht 12 bzw. das polarisierte Rekonstruktionslicht 12' transparent. Für Rekonstruktionslicht im Wellenlängenbereich vom Infraroten, über das Sichtbare bis in den UV-Bereich bietet sich daher beispielsweise Indiumzinnoxid als Elektrodenmaterial an. Bei anderen Ausführungsformen kann das Hologramm zwischen der Lichtausfallseite 14 Flüssigkristalle 4 der Flüssigkristallzelle 3 und der Elektrode 7 angeordnet sein. In diesem Fall muss die Elektrode 7 nicht unbedingt transparent ausgebildet sein.

In Fig. 3a ist die Flüssigkristallzelle 3 im Grundzustand, d. h. zwischen den Elektroden 6, 7 ist keine Spannung angelegt, wie mittels eines geöffneten Schalters 15 angedeutet ist, der eine Verbindung zu einer Spannungsquelle 16 unterbricht. Die Flüssigkristalle 4 in der Flüssigkristallzelle 3 weisen somit eine nematische cholesterische Struktur auf. Dies bedeutet, dass der elektrische Feldvektor 11 des polarisierten Rekonstruktionslichts 12' beim Passieren der Flüssigkristallzelle 3, exakter der Flüssigkristalle 4 der Flüssigkristallzelle 3, gedreht wird. Die Flüssigkristallzelle 3 ist nun vorteilhafterweise so ausgebildet, dass der elektrische Feldvektor 11 im Grundzustand um 90°, 270°, gedreht wird. Das aus der Flüssigkristallzelle 3 austretende Rekonstruktionslicht 12" ist somit senkrecht polarisiert zu dem in die Flüssigkristallzelle 3 eintretenden Rekonstruktionslicht 12'. Nach dem Passieren der Elektrode 7 trifft das Rekonstruktionslicht 12" auf das Hologramm 2. Dieses ist so ausgestaltet, dass es senkrecht zur Zeichnungsebene polarisiertes Rekonstruktionslicht maximal beugt. Das gebeugte Rekonstruktionslicht 12"' tritt erneut durch die Elektrode 7 und die Flüssigkristallzelle 3. Hierbei wird der elektrische Feldvektor 11 erneut gedreht und zwar genau so, dass das aus der Flüssigkristallzelle 3 austretende gebeugte Rekonstruktionslicht 12^{IV} eine parallele Polarisationsrichtung zu dem in die Flüssigkristallzelle 3 eintretenden polarisierten Rekonstruktionslicht 12' aufweist. Somit kann das gebeugte Rekonstruktionslicht 12^{IV} ungehindert durch den Polarisationsfilter 8 austreten und eine Rekonstruktion des Hologramms 2 beobachtet werden.

In Fig. 3b ist dasselbe Sicherheitselement 1 erneut schematisch dargestellt, wobei jedoch der Schalter 15 geschlossen ist, so dass über die Spannungsquelle 16 eine Spannung zwischen den Elektroden 6, 7 anliegt. Zwischen den Elektroden 6, 7 bildet sich somit ein elektrisches Feld aus, in dem sich die nematischen Flüssigkristalle 4 ausrichten. Die Flüssigkristallzelle 3 befindet sich somit in dem Umschaltzustand. Eine Richtung des Feldvektors 11 des polarisierten Rekonstruktionslichts 12' wird in diesem Falle in der Flüssigkristallzelle 3 nicht verändert. Somit ist das aus der Flüssigkristallzelle 3 austretende Rekonstruktionslicht 12" in diesem Falle immer noch in der Zeichnungsebene polarisiert. Da das Hologramm 2 so ausgebildet ist, dass es senkrecht zur Zeichnungsebene polarisiertes Rekonstruktionslicht optimal beugt, beugt es dementsprechend in der Zeichnungsebene polarisiertes Licht mit minimaler Beugungseffizienz, im Idealfalle gar nicht. In diesem Falle tritt das Rekonstruktionslicht 12" durch das Hologramm 2 hindurch.

Für den Fachmann ergibt es sich, dass das Hologramm 2 selbstverständlich anders bezüglich des Polarisationsfilters 8 orientiert werden kann, nur so, dass im Grundzustand, d. h. ohne ein anliegendes Feld zwischen den Elektroden, das aus der Flüssigkristallzelle 3 austretende Licht 12" so polarisiert ist, dass keine Rekonstruktion des Hologramms 2 stattfindet, hingegen im Umschaltzustand eine Rekonstruktion stattfindet.

In Fig. 4 ist eine schematische Draufsicht auf ein Sicherheitselement 1 gezeigt, welches eine Vielzahl von Flüssigkristallzellen 3 umfasst, denen jeweils Elektroden 6 zugeordnet sind. Diese Anordnung bildet eine Anzeigevorrichtung oder ein Display aus. In Fig. 5 ist eine schematische Schnittansicht entlang der Linie A-A dargestellt, wobei die einzelnen Bestandteile des Sicherheitselements 1 aus Gründen der Veranschaulichung erneut voneinander getrennt durch Zwischenräume dargestellt sind. Bei der dargestellten Ausführungsform ist für die Vielzahl der Flüssigkristallzellen 3 ein gemeinsamer Polarisationsfilter 8 vorgesehen. Jeder der Flüssigkristallzellen 3 ist genau eine Elektrode 6 zugeordnet. Ferner ist auf einer Lichtausfallseite der Flüssigkristalle 4 in der dargestellten Ausführungsform jeder Flüssigkristallzelle 3 eine weitere Elektrode 7 zugeordnet. Bei einer anderen Ausführungsform können diese Elektroden 7 durch eine gemeinsame Elektrode ersetzt werden, wie dies durch eine gestrichelte Linie 17 angedeutet ist. Bei der dargestellten Ausführungsform wird davon ausgegangen, dass das Hologramm 2 im Grundzustand der Flüssigkristallzellen 3 rekonstruiert wird, d. h. Rekonstruktionslicht mit maximaler Beugungseffizienz gebeugt wird. Die Flüssigkristallzellen 3, aus denen gebeugtes Rekonstruktionslicht austritt, sind in Fig. 4 grau dargestellt. Die den übrigen Flüssigkristallzellen 3 zugeordneten Elektroden 6 sind mit einer Spannungsquelle (nicht dargestellt) gekoppelt, so dass in den entsprechenden Flüssigkristallzellen 3 ein elektrisches Feld anliegt, so dass sich diese im Umschaltzustand befinden und entsprechend das Hologramm an diesen Stellen nicht rekonstruiert, d. h. das Rekonstruktionslicht nicht gebeugt wird. Die Elektroden können miteinander so elektrisch verbunden werden, dass über ein Anliegen einer einzelnen Spannung ein Individualisierungsmuster sichtbar wird. Alternativ kann das Sicherheitselement so ausgestaltet sein, dass die einzelnen Elektroden 6, 7 selektiv angesteuert werden können. Alternativ zu der Darstellung nach Fig. 4 und 5, in denen die einzelnen Flüssigkristallzellen 3 in einem regelmäßigen matrixartigen Muster angeordnet sind, können die Flüssigkristallzellen auch als beliebig geformte Segmente ausgebildet sein und hierüber ein Individualisierungsmuster realisieren. Ferner sind Ausführungsformen vorgesehen, bei denen die einzelnen Elektroden über integrierte Halbleiterschalter ansteuerbar sind. Ebenso ist es möglich, die Elektroden 6 beispielsweise zeilenartig und die Elektroden 7 spaltenweise miteinander zu verbinden, um hierüber über eine Spalten-Zeilen-Adressierung gezielt einzelne Flüssigkristallzellen ansprechen zu können. Die Vielzahl von Elektroden bietet die Möglichkeit, über eine gezielte Ansteuerung beliebige Muster oder Bilder "darzustellen". Dieses bedeutet, dass eine Rekonstruktion des Hologramms lokal beeinflusst werden kann. Die einzelnen rekonstruierenden und nicht rekonstruierenden Mustereinheiten oder zumindest verändert rekonstruierenden Mustereinheiten werden durch das gezielte Ansteuern der Elektroden herbeigeführt. Die Bereiche, in denen das Hologramm rekonstruiert, bilden beispielsweise eine Kontur eines Gesichts oder Ähnlichen ab. Neben diesem über die Ansteuerung der Elektroden beeinflussten Muster kann auch eine Information ausgelesen, beobachtet und/oder ausgewertet werden, die in dem Hologramm codiert ist. Die Ansteuerung der einzelnen Elektroden kann durch eine externe Steuervorrichtung erfolgen. Alternativ können jedoch auch aktive schaltende Elemente, beispielsweise Transistoren oder Ähnliches, in das Sicherheitselement integriert werden.

Bei einer Herstellung eines Sicherheitselements wird zunächst ein Hologramm belichtet. Dieses kann gemäß jedem beliebigen Verfahren im Stand der Technik ausgeführt werden. Insbesondere ist es möglich, unterschiedliche Interferenzstrukturen bzw. hologrammartige Strukturen in dem Hologramm zu speichern. Diese können so ausgebildet sein, dass sie eine unterschiedliche Polarisationsabhängigkeit aufweisen. So ist es beispielsweise möglich, dass die unterschiedlichen hologrammartigen Strukturen jeweils durch Rekonstruktionslicht optimal rekonstruierbar sind, deren Polarisationsvektoren senkrecht aufeinander stehen. Bei einer solchen Ausführungsform ist beispielsweise im Grundzustand einer oder mehrerer Flüssigkeitskristallzellen die eine hologrammartige Struktur und im Umschaltzustand die andere hologrammartige Struktur rekonstruierbar. Besonders bevorzugt werden reflektionshologrammartige Strukturen. Andere Ausführungsformen können jedoch Transmissionshologramme vorsehen. Insbesondere, wenn das Sicherheitselement auf ein Sicherheitsdokument aufgebracht wird, welches nicht transparent ist, kann es vorgesehen sein, eine reflektierende Schicht auf einer von der Lichtausfallseite der Flüssigkristalle der Flüssigkristallzelle abgewandten Seite des Hologramms vorzusehen, um das in Transmission rekonstruierte Hologramm durch das Hologramm hindurch zurückzureflektieren.

In dem Hologramm können individualisierende und/oder personalisierende Informationen gespeichert werden.

Über dem Hologramm werden bei der Herstellung des Sicherheitselements die Flüssigkeitskristallzelle oder die Flüssigkeitskristallzellen mit den entsprechenden Elektroden angeordnet. Werden mehrere Flüssigkristallzellen über dem Hologramm angeordnet, so kann für diese Flüssigkristallzellen eine gemeinsame Elektrode ausgebildet werden. Um eine individuelle Ansteuerbarkeit der Flüssigkristallzellen zu ermöglichen, weisen sie zusätzlich zu der gemeinsamen Elektrode dann auch noch eine "individuelle" Elektrode auf, die genau der entsprechenden Flüssigkristallzelle zugeordnet ist. Ferner werden zusätzlich der Polarisationsfilter sowie gegebenenfalls mehrerer Polarisationsfilter angeordnet. Diese werden vorzugsweise fest miteinander verbunden. Es wird darauf hingewiesen, dass jeder Flüssigkeitskristallzelle ein eigener Polarisationsfilter zugeordnet sein kann, wobei den einzelnen Flüssigkeitskristallzellen Polarisationsfilter zugeordnet werden können, die eine unterschiedliche Polarisationsrichtung aufweisen. Auch hierüber kann ein Individualisierungsmuster über eine Anordnung der Polarisationsfilter in das Sicherheitselement gespeichert werden.

Eine personalisierende und/oder individualisierende Information kann auch gespeichert werden, indem die Ausrichtungsschichten von einer Auswahl der mehreren Flüssigkristallzellen hinsichtlich ihrer Vorzugsrichtungen, in der sie eine Ausrichtung der Flüssigkristalle beeinflussen, unterschiedlich relativ zueinander und/oder den Ausrichtungsschichten der übrigen Flüssigkristallzellen angeordnet werden.

Die Erfindung ist in den Ausführungsbeispielen beispielhaft unter Verwendung von nematischen Verdrillungs-Flüssigkristallzellen (TN-Flüssigkristallzellen) beschreiben. Es können jedoch auch andere Ausführungsformen verwendet werden. Insbesondere können die Elektroden seitlich in Bezug auf eine Lichteinfall- und/oder Lichtausfallseite der Flüssigkristalle der Flüssigkristallzelle oder -zellen angeordnet sein. Voraussetzung ist lediglich, dass eine Polarisation des hindurchtretenden Lichts in Abhängigkeit des über ein Anlegen einer Spannung an die Elektroden erzeugten elektrischen Felds verändert wird.

Beschrieben wurde die Verwendung von einem Hologramm. Es ist jedoch auch möglich unterschiedliche Hologramme und/oder refraktive Strukturen relativ zu den Flüssigkristallzellen einzubringen, die unterschiedlich ausgebildet sein können.

Es ergibt sich für den Fachmann, dass eine Vielzahl von Kombinationen der einzelnen Merkmale möglich ist, um Sicherheitselemente herzustellen. Diese werden vorzugsweise in ein Sicherheitsdokument und/oder Wertdokument integriert. Beispielsweise kann ein Sicherheitselement auf einen vorzugsweise aus Kunststoff hergestellten Kartenkörper aufgeklebt werden. Ebenso ist es möglich, ein Sicherheitselement in einen solchen Kartenkörper einzulaminieren.

### Bezugszeichenliste

- 1: Sicherheitselement
- 2: Hologramm
- 3: Flüssigkeitskristallzelle
- 4: Flüssigkristalle
- 5: Ausrichtungsschichten
- 6, 7: Elektroden
- 8: Polarisationsfilter
- 9: Rekonstruktionslichtstrahl
- 9': gebeugter Rekonstruktionslichtstrahl
- 10: weiterer Rekonstruktionslichtstrahl
- 11: Feldvektor des elektrischen Feldes
- 12: Rekonstruktionslicht
- 12": in der Ebene gedrehtes polarisiertes Rekonstruktionslicht
- 12'", 12^{IV}: gebeugtes Rekonstruktionslicht
- 13: Lichteinfallseite
- 14: Lichtausfallseite
- 15: Schalter
- 16: Spannungsquelle
- 17: gestrichelte Linie

## Patentansprüche

1. Sicherheitselement (1) umfassend mindestens eine Flüssigkristallzelle (3), welche zwischen zwei einander gegenüber liegend angeordneten Ausrichtungsschichten (5) angeordnete Flüssigkristalle (4) umfasst, wobei die den Flüssigkristallen (4) zugewandten Oberflächen der Ausrichtungsschichten (5) so beschaffen sind, dass sich die Flüssigkristalle (4) in einem feldfreien Grundzustand helixartig ausrichten, und die Flüssigkristallzelle zwei der mindestens einen Flüssigkristallzelle (3) zugeordnete Elektroden (6, 7) umfasst, zwischen denen ein elektrisches Feld anlegbar ist, bei dessen Existenz ein Umschaltzustand eintritt, bei dem sich die Flüssigkristalle (4) umorientieren und auf einer Lichteinfallseite (13) der mindestens einen Flüssigkristallzelle (3) ein Polarisationsfilter (8) angeordnet ist, wobei auf einer der Lichteinfallseite (13) gegenüberliegenden Lichtausfallseite (14) der Flüssigkristalle (4) der mindestens einen Flüssigkristallzelle (3) mindestens ein Hologramm (2) angeordnet ist,
**dadurch gekennzeichnet, dass**
das Hologramm derart ausgelagt ist, dass dessen Rekonstruktion, insbesondere dessen Beugungseffizienz, von einem Polarisationszustand eines zur Rekonstruktion verwendeten Lichts (9, 10, 12) abhängig ist.

2. Sicherheitselement (1) nach Anspruch 1, **dadurch gekennzeichnet, dass** zwischen der Lichtausfallseite (14) der Flüssigkristalle (4) der Flüssigkristallzelle (3) und dem mindestens einen Hologramm (2) kein Polarisationsfilter angeordnet ist.

3. Sicherheitselement (1) nach Anspruch 1 oder 2, **dadurch gekennzeichnet, dass** das mindestens eine Hologramm (2) relativ zu dem Polarisationsfilter (8) derart angepasst an die Flüssigkristallzelle (3) ausgerichtet ist, dass das mindestens eine Hologramm (2) in dem feldfreien Grundzustand der Flüssigkeitszelle (3) oder in dem Umschaltzustand der Flüssigkristallzelle (3) optimal rekonstruierbar ist.

4. Sicherheitselement (1) nach einem der vorangehenden Ansprüche, **dadurch gekennzeichnet, dass** das mindestens eine Hologramm (2) relativ zu dem Polarisationsfilter (8) so ausgerichtet ist und die mindestens eine Flüssigkristallzelle (3) so ausgestaltet ist, dass das mindestens eine Hologramm (2) in dem feldfreien Grundzustand der Flüssigkristallzelle (3) eine maximale Beugungseffizienz und in dem Umschaltzustand der Flüssigkristallzelle (3) eine minimale Beugungseffizienz aufweist, oder das mindestens eine Hologramm (2) in dem feldfreien Grundzustand der Flüssigkristallzelle (3) eine minimale Beugungseffizienz und in dem Umschaltzustand der Flüssigkristallzelle (3) eine maximale Beugungseffizienz aufweist.

5. Sicherheitselement (1) nach einem der vorangehenden Ansprüche, **dadurch gekennzeichnet, dass** das mindestens eine Hologramm (2) eine Reflexionshologrammstruktur und/oder eine Transmissionshologrammstruktur umfasst.

6. Sicherheitselement (1) nach einem der vorangehenden Ansprüche, **dadurch gekennzeichnet, dass** zusätzlich eine oder mehrere weitere Flüssigkristallzellen (3) neben der mindestens einen Flüssigkristallzelle (3) angeordnet sind, denen jeweils zwei Elektroden (6, 7) zugeordnet sind, um bei Anlegen eines elektrischen Feldes eine Umorientierung der Flüssigkristalle zu erreichen, und vor deren Lichteinfallsseite (13) der Polarisationsfilter (8) oder weitere Polarisationsfilter angeordnet sind.

7. Sicherheitselement (1) nach einem der vorangehenden Ansprüche, **dadurch gekennzeichnet, dass** an einer von den Flüssigkristallen (4) der Flüssigkeitskristallzelle (3) und/oder der mehreren Flüssigkeitskristallzellen (3) abgewandten Seite des Hologramms (2) ein reflektierendes Element, insbesondere ein spiegelndes Element, angeordnet ist.

8. Sicherheitselement (1) nach einem der vorangehenden Ansprüche, **dadurch gekennzeichnet, dass** in dem mindestens einen Hologramm (2) eine oder mehrere individualisierende und/oder personalisierende erste Informationen gespeichert sind.

9. Sicherheitselement (1) nach einem der vorangehenden Ansprüche, **dadurch gekennzeichnet, dass** die eine und die mehreren weiteren Flüssigkristallzellen (3) individuell ansteuerbar sind und eine Anzeigevorrichtung ausbilden.

10. Sicherheitselement (1) nach einem der vorangehenden Ansprüche, **dadurch gekennzeichnet, dass** ein oder mehrere Schaltelemente mit der mindestens einen Flüssigkristallzelle (3) und/oder den mehreren weiteren Flüssigkristallzellen (3) verbunden sind, so dass diese einzeln und/oder gruppenweise über das eine oder die mehreren Schaltelemente mit einer Spannung beaufschlagbar sind.

11. Sicherheitselement (1) nach einem der vorangehenden Ansprüche, **dadurch gekennzeichnet, dass** einige Flüssigkristallzellen der mindestens einen und der mehreren weiteren Flüssigkristallzellen und/oder einige der diesen einigen Flüssigkristallzellen zugeordneten weiteren Polarisationsfilter so ausgebildet sind, dass diese einigen Flüssigkristallzellen in einem spannungslosen Zustand eine von den übrigen Flüssigkristallzellen abweichende Polarisationseigenschaft aufweisen und über ihre relative Anordnung dieser einigen Flüssigkristallzellen zueinander und/oder gegenüber den übrigen Flüssigkristallzellen eine zweite individualisierende und/oder personalisierende Information gespeichert ist.

12. Sicherheitselement (1) nach einem der vorangehenden Ansprüche, **dadurch gekennzeichnet, dass** die der mindestens einen Flüssigkristallzelle und den mehreren weiteren Flüssigkristallzellen zugeordneten Elektroden (6, 7) so strukturiert sind, dass eine Auswahl hiervon über ein Anlegen einer einzigen Spannung gemeinsam zwischen ihrem Grundzustand und ihrem Umschaltzustand umgeschaltet werden können.

13. Verfahren zum Erzeugen eines Sicherheitselements (1), bei dem mindestens eine Flüssigkristallzelle (3), welche zwischen zwei einander gegenüber liegend angeordneten Ausrichtungsschichten (5) angeordnete Flüssigkristalle (4) umfasst, wobei die den Flüssigkristallen (4) zugewandten Oberflächen der Ausrichtungsschichten (5) so beschaffen sind, dass sich die Flüssigkristalle (4) in einem feldfreien Grundzustand helixartig ausrichten, und sich die Flüssigkristalle (4) in einem ein elektrisches Feld aufweisenden Umschaltzustand umorientieren, zwischen zwei der mindestens einen Flüssigkristallzelle (3) zugeordneten Elektroden (6, 7) angeordnet wird, zwischen denen ein elektrisches Feld zum Erzeugen des Umschaltzustands anlegbar ist, und vor einer Lichteinfallseite (13) der Flüssigkristalle (4) der Flüssigkristallzelle (3) ein Polarisationsfilter (8) angeordnet wird, wobei auf einer der Lichteinfallseite (13) gegenüberliegenden Lichtausfallseite (14) der mindestens einen Flüssigkristallzelle (3) mindestens ein Hologramm (2) angeordnet wird
**dadurch gekennzeichnet**,
das Hologramm so ausgewählt wird, dass dessen Rekonstruktion von einem Polarisationszustand des für die Rekonstruktion verwendeten Lichts abhängig ist.

14. Verfahren nach Anspruch 13, **dadurch gekennzeichnet, dass** zwischen der Lichtausfallseite (14) der Flüssigkristalle (4) der Flüssigkristallzelle (3) und dem mindestens einen Hologramm (2) kein Polarisationsfilter (8) angeordnet wird.

15. Verfahren nach Anspruch 13 oder 14, **dadurch gekennzeichnet, dass** das mindestens eine Hologramm (2) relativ zu dem Polarisationsfilter (8) angepasst an die Flüssigkristallzelle (3) ausgerichtet wird, so dass das mindestens eine Hologramm (2) in dem feldfreien Grundzustand der Flüssigkristallzelle (3) oder in dem Umschaltzustand der Flüssigkristallzelle (3) optimal rekonstruierbar ist.

## Claims

1. Security element (1) comprising at least one liquid crystal cell (3) which comprises liquid crystals (4) arranged between two opposite orientation layers (5), wherein the surfaces of the orientation layers (5) that face towards the liquid crystals (4) are such that the liquid crystals (4) are oriented in a helical manner in a field-free base state, and the liquid crystal cell comprises two electrodes (6, 7) which are assigned to the at least one liquid crystal cell (3) and between which an electric field can be applied, the existence of said electric field causing a switching state during which the liquid crystals (4) reorientate, and a polarisation filter (8) is arranged on a light incidence side (13) of the at least one liquid crystal cell (3), wherein at least one hologram (2) is arranged on a light output side (14), opposite to the light incidence side (13), of the liquid crystals (4) of the at least one liquid crystal cell (3), **characterised in that** the hologram is designed in such a way that the reconstruction thereof, in particular the diffraction efficiency thereof, is dependent on a polarisation state of a light (9, 10, 12) used for the reconstruction.

2. Security element (1) according to claim 1, **characterised in that** no polarisation filter is arranged between the light output side (14) of the liquid crystals (4) of the liquid crystal cell (3) and the at least one hologram (2).

3. Security element (1) according to claim 1 or 2, **characterised in that** the at least one hologram (2) is oriented relative to the polarisation filter (8) in a manner adapted to the liquid crystal cell (3) in such a way that the at least one hologram (2) can be optimally reconstructed in the field-free base state of the liquid crystal cell (3) or in the switching state of the liquid crystal cell (3).

4. Security element (1) according to any one of the preceding claims, **characterised in that** the at least one hologram (2) is oriented relative to the polarisation filter (8) in such a way and the at least one liquid crystal cell (3) is configured in such a way that the at least one hologram (2) has a maximum diffraction efficiency in the field-free base state of the liquid crystal cell (3) and has a minimum diffraction efficiency in the switching state of the liquid crystal cell (3), or the at least one hologram (2) has a minimum diffraction efficiency in the field-free base state of the liquid crystal cell (3) and has a maximum diffraction efficiency in the switching state of the liquid crystal cell (3).

5. Security element (1) according to any one of the preceding claims, **characterised in that** the at least one hologram (2) comprises a reflection hologram structure and/or a transmission hologram structure.

6. Security element (1) according to any one of the preceding claims, **characterised in that** additionally one or more further liquid crystal cells (3) are arranged next to the at least one liquid crystal cell (3), to each of which two electrodes (6, 7) are assigned in order to achieve a reorientation of the liquid crystals when an electric field is applied, and the polarisation filter (8) or further polarisation filters are arranged in front of the light incidence side (13) thereof.

7. Security element (1) according to any one of the preceding claims, **characterised in that** a reflective element, in particular a mirrored element, is arranged on a side of the hologram (2) remote from the liquid crystals (4) of the liquid crystal cell (3) and/or of the plurality of liquid crystal cells (3).

8. Security element (1) according to any one of the preceding claims, **characterised in that** one or more individualising and/or personalising first information items are stored in the at least one hologram (2).

9. Security element (1) according to any one of the preceding claims, **characterised in that** the one and the plurality of further liquid crystal cells (3) can be actuated individually and form a display device.

10. Security element (1) according to any one of the preceding claims, **characterised in that** one or more switching elements are connected to the at least one liquid crystal cell (3) and/or to the plurality of further liquid crystal cells (3) so that a voltage can be applied thereto individually and/or in groups via the one or more switching elements.

11. Security element (1) according to any one of the preceding claims, **characterised in that** some liquid crystal cells of the at least one and of the plurality of further liquid crystal cells and/or some of the further polarisation filters assigned to said some liquid crystal cells are designed such that said some liquid crystal cells have, in a voltage-free state, a polarisation property that differs from the other liquid crystal cells and a second individualising and/or personalising information item is stored via the relative arrangement of said some liquid crystal cells with respect to one another and/or with respect to the other liquid crystal cells.

12. Security element (1) according to any one of the preceding claims, **characterised in that** the electrodes (6, 7) assigned to the at least one liquid crystal cell and to the plurality of further liquid crystal cells are structured in such a way that a selection thereof can be jointly switched between their base state and their switching state via the application of a single voltage.

13. Method for producing a security element (1), in which at least one liquid crystal cell (3) which comprises liquid crystals (4) arranged between two opposite orientation layers (5), wherein the surfaces of the orientation layers (5) that face towards the liquid crystals (4) are such that the liquid crystals (4) are oriented in a helical manner in a field-free base state and the liquid crystals (4) reorientate in a switching state comprising an electric field, is arranged between two electrodes (6, 7) which are assigned to the at least one liquid crystal cell (3) and between which an electric field can be applied in order to generate the switching state, and a polarisation filter (8) is arranged in front of a light incidence side (13) of the liquid crystals (4) of the liquid crystal cell (3), wherein at least one hologram (2) is arranged on a light output side (14), opposite to the light incidence side (13), of the at least one liquid crystal cell (3), **characterised in that** the hologram is selected in such a way that the reconstruction thereof is dependent on a polarisation state of the light used for the reconstruction.

14. Method according to claim 13, **characterised in that** no polarisation filter (8) is arranged between the light output side (14) of the liquid crystals (4) of the liquid crystal cell (3) and the at least one hologram (2).

15. Method according to claim 13 or 14, **characterised in that** the at least one hologram (2) is oriented relative to the polarisation filter (8) in a manner adapted to the liquid crystal cell (3) in such a way that the at least one hologram (2) can be optimally reconstructed in the field-free base state of the liquid crystal cell (3) or in the switching state of the liquid crystal cell (3).

## Revendications

1. Elément de sécurité (1) comportant au moins une cellule à cristaux liquides (3), laquelle comporte des cristaux liquides (4) disposés entre deux couches d'orientation (5) disposées de manière à se faire face l'une par rapport à l'autre, sachant que les surfaces des couches d'orientation (5), tournées vers les cristaux liquides (4), sont configurées de telle manière que les cristaux liquides (4) sont orientés de manière hélicoïdale dans un état de base sans champ, et sachant que la cellule à cristaux liquides comporte deux électrodes (6, 7) associées à la cellule à cristaux liquides (3) au moins au nombre de une, entre lesquelles un champ électrique peut être appliqué, en présence duquel apparaît un état de commutation, dans le cadre duquel les cristaux liquides (4) changent d'orientation et sachant qu'un filtre de polarisation (8) est disposé sur un côté d'incidence de la lumière (13) de la cellule à cristaux liquides (3) au moins au nombre de une, sachant qu'au moins un hologramme (2) est disposé sur un côté de sortie de la lumière (14) des cristaux liquides (4) de la cellule à cristaux liquides (3) au moins au nombre de une, ledit côté de sortie de la lumière faisant face au côté d'incidence de la lumière (13), **caractérisé en ce que** l'hologramme est mis au point de telle manière que sa reconstruction, en particulier son efficacité de diffraction, dépend de l'état de polarisation d'une lumière (9, 10, 12) utilisée aux fins de la reconstruction.

2. Elément de sécurité (1) selon la revendication 1, **caractérisé en ce qu'**aucun filtre de polarisation n'est disposé entre le côté de sortie de la lumière (14) des cristaux liquides (4) de la cellule à cristaux liquides (3) et l'hologramme (2) au moins au nombre de un.

3. Elément de sécurité (1) selon la revendication 1 ou 2, **caractérisé en ce que** l'hologramme (2) au moins au nombre de un est orienté par rapport au filtre de polarisation (8) en étant adapté à la cellule à cristaux liquides (3) de telle manière que l'hologramme (2) au moins au nombre de un peut être reconstruit de manière optimale lorsque la cellule à cristaux liquides (3) se trouve dans l'état de base sans champ ou lorsque la cellule à cristaux liquides (3) se trouve dans l'état de commutation.

4. Elément de sécurité (1) selon l'une quelconque des revendications précédentes, **caractérisé en ce que** l'hologramme (2) au moins au nombre de un est orienté par rapport au filtre de polarisation (8) de telle manière et que la cellule à cristaux liquides (3) est configurée de telle manière que l'hologramme (2) au moins au nombre de un présente, lorsque la cellule à cristaux liquides (3) se trouve dans l'état de base sans champ, une efficacité de diffraction maximale et lorsque ladite cellule à cristaux liquides (3) se trouve dans l'état de commutation, une efficacité de diffraction minimale, ou **en ce que** l'hologramme (2) au moins au nombre de un présente lorsque la cellule à cristaux liquides (3) se trouve dans l'état de base sans champ, une efficacité de diffraction minimale, et lorsque ladite cellule à cristaux liquides (3) se trouve dans l'état de commutation, une efficacité de diffraction maximale.

5. Elément de sécurité (1) selon l'une quelconque des revendications précédentes, **caractérisé en ce que** l'hologramme (2) au moins au nombre de un comporte une structure d'hologramme de réflexion et/ou une structure d'hologramme de transmission.

6. Elément de sécurité (1) selon l'une quelconque des revendications précédentes, **caractérisé en ce qu'**en outre une ou plusieurs autres cellules à cristaux liquides (3) sont disposées à côté de la cellule à cristaux liquides (3) au moins au nombre de une, auxquelles sont associées respectivement deux électrodes (6, 7) afin d'obtenir lors de l'application d'un champ électrique un changement d'orientation des cristaux liquides, et **en ce que** le filtre de polarisation (8) ou d'autres filtres de polarisation sont disposés avant le côté d'incidence de la lumière (13) des cristaux liquides.

7. Elément de sécurité (1) selon l'une quelconque des revendications précédentes, **caractérisé en ce qu'**un élément réfléchissant est disposé sur un côté de l'hologramme (2), lequel côté est opposé aux cristaux liquides (4) de la cellule à cristaux liquides (3) et/ou des nombreuses cellules à cristaux liquides (3)

8. Elément de sécurité (1) selon l'une quelconque des revendications précédentes, **caractérisé en ce qu'**une première information ou plusieurs premières informations individualisées et/ou personnalisées sont mémorisées dans l'hologramme (2) au moins au nombre de un.

9. Elément de sécurité (1) selon l'une quelconque des revendications précédentes, **caractérisé en ce que** la cellule à cristaux liquides au moins au nombre de une et les nombreuses autres cellules à cristaux liquides (3) peuvent être commandées individuellement et constituent un dispositif d'affichage.

10. Elément de sécurité (1) selon l'une quelconque des revendications précédentes, **caractérisé en ce qu'**un élément de commutation ou plusieurs éléments de commutation sont reliés à la cellule à cristaux liquides (3) au moins au nombre de une et/ou aux nombreuses autres cellules à cristaux liquides (3) de sorte que ces dernières peuvent être soumises individuellement et/ou en groupe à l'action d'une tension par l'intermédiaire de l'élément de commutation au moins au nombre de un ou des nombreux éléments de commutation.

11. Elément de sécurité (1) selon l'une quelconque des revendications précédentes, **caractérisé en ce que** quelques cellules à cristaux liquides issues des nombreuses autres cellules à cristaux liquides et/ou quelques autres filtres de polarisation associés à ces quelques cellules à cristaux liquides sont réalisés de telle manière que ces quelques cellules à cristaux liquides présentent dans un état sans tension une propriété de polarisation divergeant de celle des autres cellules à cristaux liquides, et/ou **en ce qu'**une deuxième information individualisée et/ou personnalisée est mémorisée du fait de l'agencement relatif desdites quelques cellules à cristaux liquides les unes par rapport aux autres et/ou par rapport aux cellules à cristaux liquides restantes.

12. Elément de sécurité (1) selon l'une quelconque des revendications précédentes, **caractérisé en ce que** les électrodes (6, 7) associées à la cellule à cristaux liquides au moins au nombre de une et aux nombreuses autres cellules à cristaux liquides sont structurées de telle manière qu'une sélection parmi ces dernières permet de procéder à une commutation entre leur état de base et leur état de commutation par l'intermédiaire d'une seule tension appliquée.

13. Procédé servant à produire un élément de sécurité (1), dans le cadre duquel au moins une cellule à cristaux liquides (3), qui comporte des cristaux liquides (4) disposés entre deux couches d'orientation (5) disposées de manière à se faire face, sachant que les surfaces des couches d'orientation (5), tournées vers les cristaux liquides (4), sont configurées de telle manière que les cristaux liquides (4) sont orientés de manière hélicoïdale dans un état de base sans champ, et que les cristaux liquides (4) changent d'orientation dans un état de commutation présentant un champ électrique, est disposée entre deux électrodes (6, 7) associées à la cellule à cristaux liquides (3) au moins au nombre de une, entre lesquelles électrodes peut être appliqué un champ électrique servant à générer l'état de commutation, et où un filtre de polarisation (8) est disposé avant un côté d'incidence de la lumière (13) des cristaux liquides (4) de la cellule à cristaux liquides (3), sachant qu'au moins un hologramme (2) est disposé sur un côté de sortie de la lumière (14) de la cellule à cristaux liquides (3) au moins au nombre de une, lequel côté de sortie de la lumière fait face au côté d'incidence de la lumière (13), **caractérisé en ce que** l'hologramme est sélectionné de telle manière que sa reconstruction dépend d'un état de polarisation de la lumière utilisée pour la reconstruction.

14. Procédé selon la revendication 13, **caractérisé en ce qu'**aucun filtre de polarisation (8) n'est disposé entre le côté de sortie de la lumière (14) des cristaux liquides (4) de la cellule à cristaux liquides (3) et l'hologramme (2) au moins au nombre de un.

15. Procédé selon la revendication 13 ou 14, **caractérisé en ce que** l'hologramme (2) au moins au nombre de un est orienté par rapport au filtre de polarisation (8) en étant adapté à la cellule à cristaux liquides (3) de sorte que l'hologramme (2) au moins au nombre de un peut être reconstruit de manière optimale lorsque la cellule à cristaux liquides (3) se trouve dans l'état de base sans champ ou lorsque la cellule à cristaux liquides (3) se trouve dans l'état de commutation.
